# EUROPEAN PATENT APPLICATION

(11) **EP 4 764 481 A1**
(43) Date of publication of application: **24.06.2026**
(21) Application number: 24854061.9
(22) Date of filing: 31.05.2024
(51) Int. Cl.: G01N 27/12, H02K 9/24

(54) **GAS DETECTION DEVICE**

(30) Priority: 15.08.2023 JP 2023132284
(71) Applicant: L'Air Liquide, Société Anonyme pour l'Etude et l'Exploitation des Procédés Georges Claude, 75007 Paris (FR)
(72) Inventor: ISHIDA Yoshihiro, Tokyo 108-8509 (JP)
(74) Representative: Air Liquide
(86) International application number: PCT/JP2024/020051
(87) International publication number: WO 2025/037470

(57) **Abstract**

[Problem] To detect, at an early stage, a gas mixed into a cooling liquid flow path.

[Solution] A gas detection device comprises: a branch section which is connected to a cooling liquid flow path, and which guides a gas flowing together with the cooling liquid, to a branch flow path branching from the flow path; a gas mixing section having an inflow port into which gas guided to the branch flow path flows, an external air inlet that is provided below the inflow port, and a gas outlet that is provided above the inflow port, the gas mixing section delivering, from the outlet, a mixed gas of gas flowing in from the inflow port and external air taken in from the intake port; and a detection section which detects a predetermined gas to be detected, from mixed gas delivered from the gas mixing section.

## Description

### [Technical Field]

The present invention relates to a gas detection device.

### [Background Art]

Devices such as hydrogen compressors and generators, for example, are generally liquid-cooled, with the device being cooled by a cooling liquid such as water circulating through a closed cycle. A heat exchanger is provided in the closed cycle, and the cooling liquid, which has been warmed by cooling the device, is cooled by the heat exchanger and once again used to cool the device.

A cooled gas such as hydrogen gas is sometimes used when the cooling liquid is cooled in the heat exchanger. Specifically, the warmed cooling liquid and the cooled gas undergo heat exchange in the heat exchanger through a solid wall such of metal or the like, for example, thereby cooling the cooling liquid and warming the gas.

### [Prior Art Literature]

### [Patent Literature]

[Patent Document 1] JP H4-334948 A

### [Summary of the Invention]

### [Problem to be Solved by the Invention]

The cooling liquid and the gas such as hydrogen gas are separated by the solid wall in a heat exchanger such as described above, and therefore the gas does not normally mix into the cooling liquid flow path. However, if the solid wall deteriorates due to corrosion, etc. of the metal that forms the solid wall, for example, there is a risk of the gas leaking into the cooling liquid flow path, and of flammable hydrogen gas, etc., diffusing into unintended places, for example.

Furthermore, if the device cooled by the cooling liquid is a device using a gas such as hydrogen gas, there is a possibility of the gas leaking into the cooling liquid flow path, not only in the heat exchanger but also in the device being cooled. If the gas leaking out into the cooling liquid flow path in this way is a flammable gas such as hydrogen gas or a toxic gas that is harmful to humans, it is preferable to detect leakage of the gas quickly.

The present disclosure has been devised in light of these circumstances and has as an object to provide a gas detection device capable of detecting, at an early stage, gas entering a cooling liquid flow path.

### [Means for Solving the Problem]

According to one aspect of the present disclosure, a gas detection device comprises: a branch section which is connected to a cooling liquid flow path, and which guides a gas flowing together with the cooling liquid, to a branch flow path branching from the flow path; a gas mixing section having an inflow port into which gas guided to the branch flow path flows, an external air inlet that is provided below the inflow port, and a gas outlet that is provided above the inflow port, the gas mixing section delivering, from the outlet, a mixed gas of gas flowing in from the inflow port and external air taken in from the intake port; and a detection section which detects a predetermined gas to be detected, from mixed gas delivered from the gas mixing section.

### [Effects of the Invention]

According to the present disclosure, a gas mixed into a cooling liquid flow path can be detected at an early stage.

### [Brief Description of the Drawings]

[FIG. 1] FIG. 1 is a view showing a configuration of a gas detection device according to one embodiment.
[FIG. 2] FIG. 2 is a view illustrating gas flow control by a gas flow control unit.
[FIG. 3] FIG. 3 is a view showing a configuration of a gas mixing unit.
[FIG. 4] FIG. 4 is a view showing a specific example of detection performance.
[FIG. 5] FIG. 5 is a view showing a variant example of the gas detection device according to one embodiment.

### [Embodiments of the Invention]

An embodiment of the present invention will be described below with reference to the attached drawings. The embodiment described below is an example and should not be construed as limited by this description.

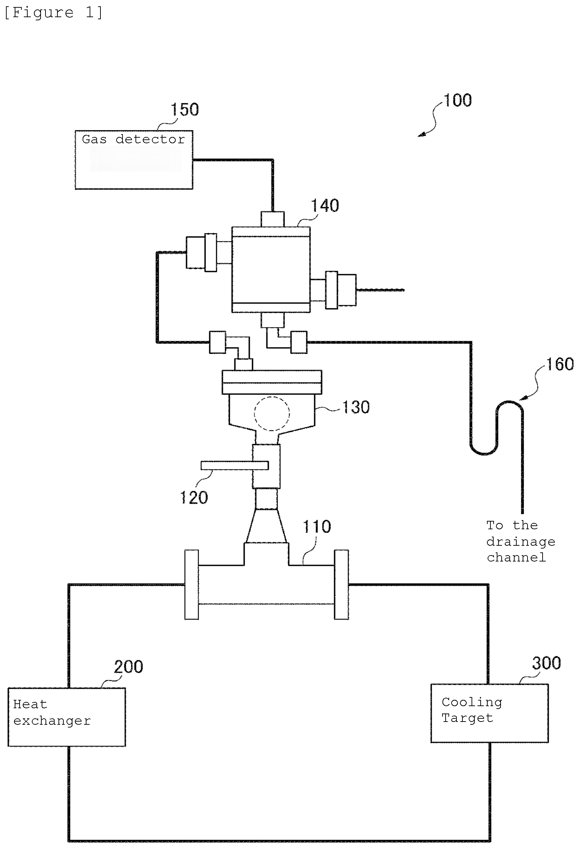

FIG. 1 shows a configuration of a gas detection device 100 according to one embodiment. The gas detection device 100 shown in FIG. 1 is connected to a cooling liquid flow path in a closed cycle circulating through a heat exchanger 200 and a device being cooled 300, and detects hydrogen gas mixing into the cooling liquid flow path in the heat exchanger 200 or the device being cooled 300. The heat exchanger 200 cools the cooling liquid by means of heat exchange between the cooling liquid and a gas such as hydrogen gas, for example. Furthermore, the device being cooled 300 is a device such as a hydrogen compressor or a generator, for example, and is cooled by the cooling liquid. The heat exchanger 200 and the device being cooled 300 are connected by piping constituting the cooling liquid flow path, forming a closed cycle through which the cooling liquid circulates.

The gas detection device 100 comprises a branch pipe 110, a valve 120, a gas flow control unit 130, a gas mixing unit 140, a gas detector 150, and a drainage portion 160.

The branch pipe 110 is connected to the cooling liquid flow path and causes the cooling liquid flow path to branch. Specifically, the branch pipe 110 is T-shaped, for example, and forms part of the flow path for the cooling liquid flowing from the heat exchanger 200 to the device being cooled 300, and also forms a branch flow path guiding part of the cooling liquid flowing through the flow path to the valve 120 which is above. This means that if hydrogen gas leaks into the cooling liquid flow path in the heat exchanger 200, for example, the branch pipe 110 guides part of the hydrogen gas which has become mixed into the flow path to the valve 120 together with the cooling liquid.

Note that the gas mixed into the cooling liquid flow path is a water-insoluble gas such as hydrogen gas, for example, and flows through the cooling liquid flow path in the form of gas bubbles together with the cooling liquid. The density of this gas is lower than the density of the cooling liquid, and therefore the gas flows into the upwardly-leading branch flow path and is guided to the valve 120. Furthermore, the cooling liquid flows into the upwardly-leading branch flow path and is guided to the valve 120 by the pressure of liquid flow in the flow path.

The valve 120 restricts inflow into the gas flow control unit 130 of the cooling liquid and hydrogen gas guided by the branch pipe 110. Specifically, the valve 120 can be opened and closed by moving a lever, and, in an open state, allows the cooling liquid and hydrogen gas guided from the branch pipe 110 to flow into the gas flow control unit 130, but, while in a closed state, obstructs inflow into the gas flow control unit 130 of the cooling liquid and hydrogen gas guided from the branch pipe 110.

The gas flow control unit 130 captures the hydrogen gas flowing in from the open valve 120 and controls delivery of the hydrogen gas to the gas mixing unit 140. Specifically, the gas flow control unit 130 has a float which floats on the cooling liquid stored in an internal storage tank, and uses the rising or falling of the float, which corresponds to the height of the surface of the cooling liquid, to control opening and closing of a hydrogen gas outflow port.

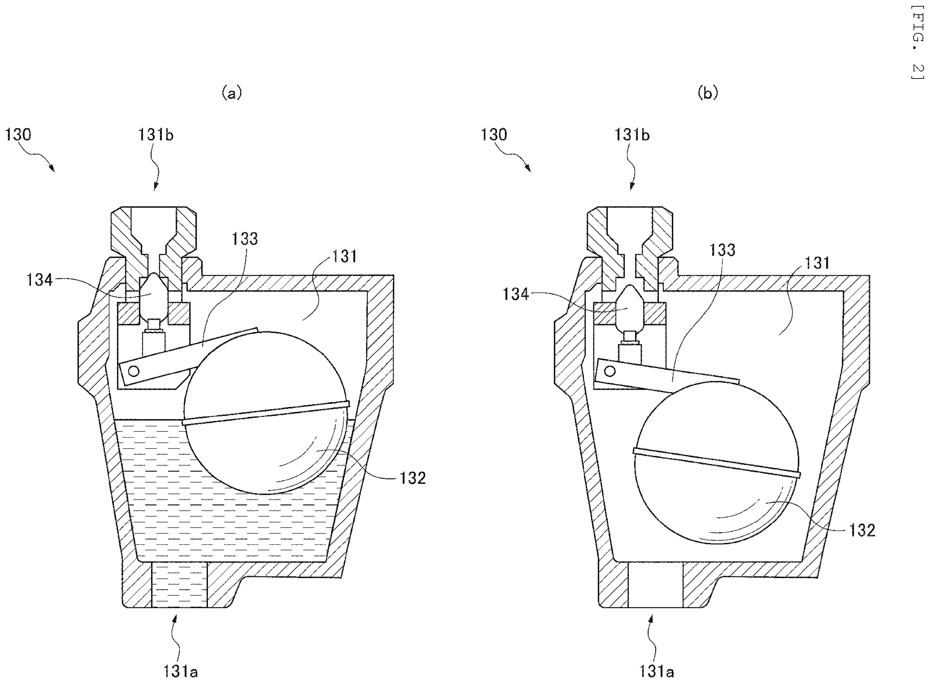

FIG. 2 is a view showing gas flow control by the gas flow control unit 130.

As shown in FIG. 2(a), a float 132 which floats on the cooling liquid is disposed in a storage tank 131 of the gas flow control unit 130. The cooling liquid and hydrogen gas are able to flow in from an inflow port 131a of the storage tank 131, and if there is no hydrogen gas mixed into the cooling liquid flow path, the storage tank 131 is filled only with the cooling liquid. At this point, the level of the cooling liquid is high inside the storage tank 131, and therefore the float 132 rises and pushes a lever 133 up. A valve body 134 is connected to an upper surface of the lever 133, and an outflow port 131b of the storage tank 131 is closed by means of the valve body 134 when the lever 133 is pushed up. When there is no hydrogen gas mixed into the cooling liquid flow path, the outflow port 131b is closed and the cooling liquid does not flow out of the storage tank 131.

When hydrogen gas is mixed into the cooling liquid flow path, the hydrogen gas flows into the storage tank 131 and the level of the cooling liquid gradually drops as the hydrogen gas is being captured inside the storage tank 131. When the level of the cooling liquid drops, the float 132 then falls, and the lever 133 and the valve body 134 also fall, as shown in FIG. 2(b). As a result, the valve body 134 which had closed the outflow port 131b moves downward and the outflow port 131b is opened. When the hydrogen gas accumulated in the storage tank 131 increases, the hydrogen gas flows out of the outflow port 131b.

Thus, when hydrogen gas accumulates in the storage tank 131, the gas flow control unit 130 opens the outflow port 131b to deliver the hydrogen gas therein out to the gas mixing unit 140.

The gas mixing unit 140 mixes air and the hydrogen gas delivered from the gas flow control unit 130, and delivers the resulting mixed gas to the gas detector 150. Specifically, the gas mixing unit 140 comprises an inflow port allowing hydrogen gas to flow in between an intake port for taking in external air and a outlet for delivering the gas to the gas detector 150, and a mixed gas in which the hydrogen gas flowing in from the inflow port and the air moving from the intake port to the outlet are mixed is delivered from the outlet. Furthermore, the gas mixing unit 140 drains moisture flowing in together with the hydrogen gas from the gas flow control unit 130 through a drainage portion 160.

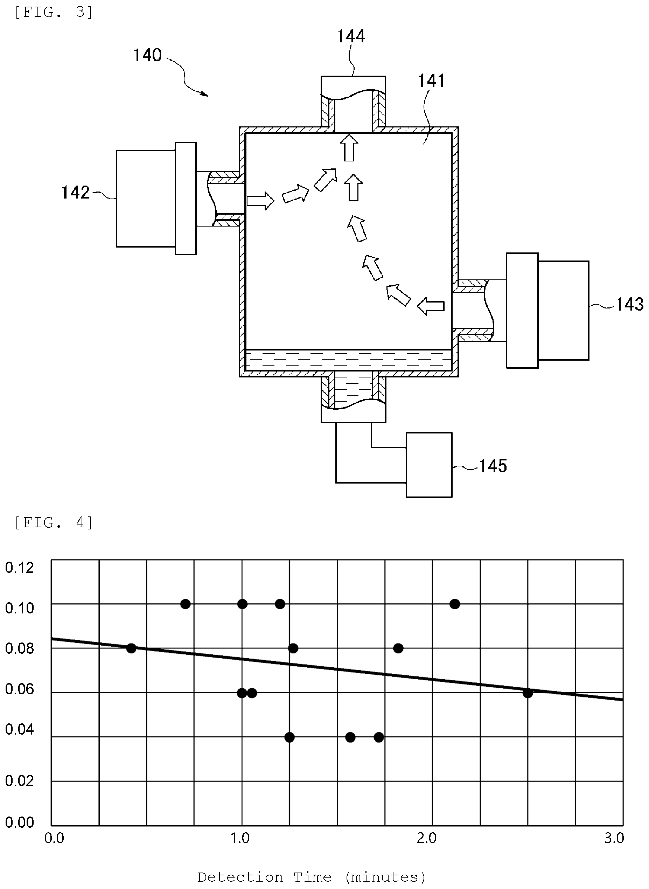

FIG. 3 shows a configuration of the gas mixing unit 140. As shown in FIG. 3, the gas mixing unit 140 has a tank-like structure provided with multiple inlets/outlets. That is to say, an inflow port 142 in which hydrogen gas flows is provided on one side surface of a tank 141 capable of internally accommodating gas, and an intake port 143 for taking in air from the outside (external air) is provided on another side surface of the tank 141. A outlet 144 for delivering the mixed gas comprising hydrogen gas and air to the gas detector 150 is provided on an upper surface of the tank 141, and a drainage port 145 for draining moisture flowing into the tank 141 together with the hydrogen gas is provided on a lower surface of the tank 141.

Since the inflow port 142 opens into the tank 141 above the intake port 143 for taking in external air and below the outlet 144 for delivering the mixed gas, the hydrogen gas flowing in from the inflow port 142 mixes with the air moving from the intake port 143 to the outlet 144. The outlet 144 can therefore reliably deliver the mixed gas made up of hydrogen gas and air to the gas detector 150.

Furthermore, the moisture flowing in from the inflow port 142 together with the hydrogen gas accumulates in a bottom portion of the tank 141 and is drained out of the drainage port 145 through the drainage portion 160. As a result, moisture accumulating in the bottom portion does not reach as far as the external air inlet 143, so there is no backflow from the intake port 143 and the inflow of air is unobstructed.

Note that the inflow port 142 and the intake port 143 may also be provided on the same side surface of the tank 141.

The gas detector 150 draws in the mixed gas from the gas mixing unit 140 and detects that a predetermined gas to be detected is contained in the mixed gas. Specifically, the gas detector 150 may be a general-purpose gas detector comprising a hot-wire semiconductor sensor or a contact combustion sensor, etc., for example, and the gas to be detected is hydrogen gas, for example. The gas detector 150 may utilize a combustion reaction using air (oxygen) when detecting the gas to be detected, but hydrogen gas can be reliably detected by mixing the gas to be detected, e.g. hydrogen gas, with air in the gas mixing unit 140. Upon detecting the gas to be detected, the gas detector 150 outputs a warning sound and/or displays a warning, for example.

The drainage portion 160 expels drainage water from the drainage port 145 in the gas mixing unit 140 to an external drain, etc., for example. The drainage portion 160 causes drainage water from above to pass through an S-shaped pipe and expelled into the drain below. Some of the drainage water therefore accumulates in the bend of the S-shaped pipe of the drainage portion 160, obstructing the passage of gas. As a result, the gas is prevented from flowing out of the gas mixing unit 140 through the drainage portion 160, making it possible to ensure reliable gas detection.

The gas detection device 100 thus captures the hydrogen gas mixed into the cooling liquid flow path, thereby mixing the hydrogen gas with air, and detects hydrogen gas in the resulting mixed gas with the gas detector 150. Hydrogen gas mixed into the cooling liquid flow path can therefore be detected at an early stage.

FIG. 4 shows a specific example of a leakage amount of hydrogen gas leaking into the cooling liquid flow path, and a detection time until the gas detection device 100 detects the hydrogen gas.

As indicated by the approximation line of the relationship between the leakage amount and the detection time plotted in FIG. 4, the detection time tends to lengthen as the amount of leakage of hydrogen gas leaking into the cooling liquid flow path decreases. For example, when the amount of leakage of hydrogen gas is around 0.08 NL (normal litres) per minute, the hydrogen gas can be detected in around 30 seconds to 1 minute, and when the amount of leakage of hydrogen gas is around 0.04 NL, the hydrogen gas can be detected in around 1 minute 30 seconds to 2 minutes.

According to this embodiment, as described above, the hydrogen gas mixing into the cooling liquid flow path is captured and caused to flow in from the tank inflow port lying between the external air inlet and the gas outlet, whereby hydrogen gas and air are mixed, and the resulting mixed gas is delivered to the gas detector from the outlet. Gas mixing into the cooling liquid flow path can therefore be detected at an early stage.

It should be noted that, in the embodiment described above, the hydrogen gas was captured by means of the gas flow control unit 130, which controls delivery to the gas mixing unit 140, but the hydrogen gas may equally flow directly into the gas mixing unit 140 from the cooling liquid flow path.

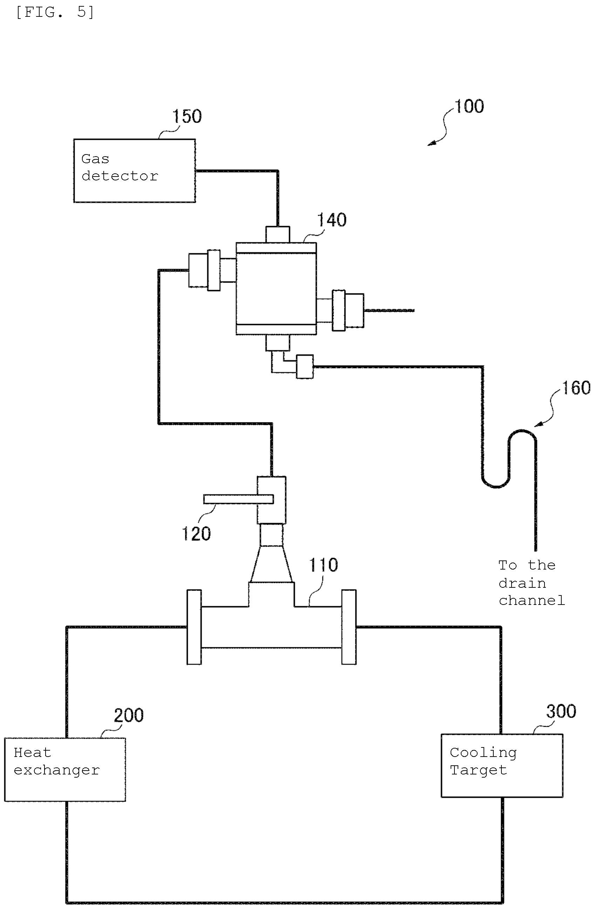

FIG. 5 shows a variant example of the gas detection device 100 according to the embodiment. Components in FIG. 5 which are the same as those in FIG. 1 bear the same reference symbols.

As shown in FIG. 5, the gas detection device 100 does not include the gas flow control unit 130, and the hydrogen gas flows into the inflow port 142 of the gas mixing unit 140 from the cooling liquid flow path when the valve 120 is in the open state. In this process, the moisture flowing in from the inflow port 142 together with the hydrogen gas accumulates in the bottom portion of the tank 141 and is drained from the drainage port 145 through the drainage portion 160.

The gas detection device 100 according to this embodiment thus also enables gas mixing into the cooling liquid flow path to be detected by means of a simple configuration.

Furthermore, a pipe diameter of the branch pipe 110 may be greater than a pipe diameter of the surrounding piping that forms the cooling liquid flow path. Specifically, the flow velocity of the cooling liquid in the branch pipe 110 may be reduced by making the pipe diameter of the part of the branch pipe forming the flow path that connects the heat exchanger 200 and the device being cooled 300 greater than the pipe diameter of the surrounding piping. By reducing the flow velocity of the cooling liquid in the branch pipe 110, a greater quantity of the hydrogen gas flowing together with the cooling liquid can be guided to the branching flow path, making it possible to further shorten the time until detection of the hydrogen gas.

Furthermore, in the embodiment described above, hydrogen gas was described as the gas which mixes into the cooling liquid flow path and is to be detected by the gas detector 150, but the gas detection device 100 may also be used to detect a gas other than hydrogen gas.

### [Reference Signs List]

- 100: Gas detection device
- 110: Branch pipe
- 120: Valve
- 130: Gas flow control unit
- 140: Gas mixing section
- 141: Tank
- 142: Inflow port
- 143: Intake port
- 144: Outlet
- 145: Drainage port
- 150: Gas detector
- 160: Drainage portion

## Claims

1. A gas detection device comprising:
a branch section which is connected to a cooling liquid flow path, and which guides gas flowing together with the cooling liquid, to a branch flow path branching from the flow path;
a gas mixing section having an inflow port into which gas guided to the branch flow path flows, an external air inlet that is provided below the inflow port, and a gas outlet that is provided above the inflow port, the gas mixing section delivering, from the outlet, a mixed gas of gas flowing in from the inflow port and external air taken in from the intake port; and
a detection section which detects a predetermined gas to be detected, from mixed gas delivered from the gas mixing section.

2. The gas detection device according to Claim 1, further comprising a gas flow control section that captures gas guided to the branch flow path and delivers captured gas to the gas mixing section.

3. The gas detection device according to Claim 1 or 2,
wherein the gas mixing section comprises:
a drainage port for draining moisture that flows in from the inflow port together with gas.

4. The gas detection device according to Claim 1 or 2,
wherein the detection section comprises:
a gas detector that detects a predetermined gas to be detected, by means of a combustion reaction of the mixed gas.
